# DEMANDE DE BREVET EUROPEEN

(11) **EP 0 835 036 A1**
(43) Date de publication de la demande: **08.04.1998**
(21) Numéro de dépôt: 97402262.6
(22) Date de dépôt: 29.09.1997
(51) Int. Cl.: H04Q 11/00, H04L 12/56

(54) **Commutateur optique**

(30) Priorité: 07.10.1996 FR 9612190
(71) Demandeur: ALCATEL ALSTHOM COMPAGNIE GENERALE D'ELECTRICITE, 75008 Paris (FR)
(72) Inventeur: Chiaroni, Dominique, 92160 Antony (FR); De Bouaurd, Dominique, 91700 Ste Genevieve Des Bois (FR); Sotom, Michel, 75015 Paris (FR); Masetti, Francisco, 75015 Paris (FR)
(74) Mandataire: Fournier, Michel Robert Marie

(57) **Abrégé**

Pour éviter l'introduction de bruit interférométrique, des limitations quant à la rapidité de la commutation et l'introduction de pertes, le commutateur comporte :
- n coupleurs passifs (C1-Cn) comprenant chacun un nombre k de sorties (A1-Ak) et une entrée (Q) apte à recevoir un signal d'entrée (E1-En),
- k multiplexeurs de longueurs d'onde (M1-Mk) comprenant n entrées (B1-Bn) calées respectivement sur n longueurs d'onde (λ1-λn).

Pour chaque multiplexeur (Mj), celle de ses entrées (Bi) qui est calée sur une desdites longueurs d'onde (λi) est couplée par l'intermédiaire d'une porte optique amplificatrice (Gj) à une des sorties (Aj) de celui des coupleurs (Ci) prévu pour recevoir un signal d'entrée (Ei) porté par cette même longueur d'onde (λi).

Application pour les fonctions de routage dans les réseaux de communication à liaisons optiques.

## Description

L'invention se situe dans le domaine des transmissions d'informations utilisant des liaisons optiques. Elle concerne plus particulièrement les commutateurs optiques employés dans les réseaux de communication équipés de ce type de liaisons. Ils servent notamment à réaliser des fonctions de routage dans le réseau.

Généralement, les commutateurs optiques sont conçus pour aiguiller sélectivement en fonction d'une commande un ou plusieurs signaux optiques reçus d'une ou de plusieurs lignes de transmission vers d'autres lignes. Le commutateur peut être purement spatial. Il peut aussi être temporel, c'est-à-dire capable de retarder sélectivement les signaux d'entrée d'une durée variable en fonction de la commande. Les commutateurs temporels sont notamment utilisés pour résoudre des conflits dans les systèmes à commutation de paquets.

Les commutateurs connus jusqu'à présent présentent cependant des inconvénients, notamment l'introduction de bruit interférométrique, des limitations quant à la rapidité de la commutation et l'introduction de pertes.

L'invention a pour but de remédier aux inconvénients précédents. Dans ce but, l'invention a pour objet un dispositif de commutation pour transmettre sélectivement en fonction d'une commande d'aiguillage n signaux optiques d'entrée vers un ou plusieurs ports de sortie, lesdits signaux d'entrée ayant la forme d'ondes optiques modulées qui possèdent respectivement des longueurs d'onde différentes, caractérisé en ce qu'il comporte :
- n coupleurs passifs comprenant chacun un nombre de sorties égal au nombre k desdits ports de sortie, et au moins une entrée apte à recevoir un desdits signaux d'entrée,
- k multiplexeurs de longueurs d'onde comprenant chacun une sortie constituant un desdits ports de sortie, et n entrées calées respectivement sur lesdites longueurs d'onde,
et en ce que, pour chaque multiplexeur, celle de ses entrées qui est calée sur une desdites longueurs d'onde est couplée par l'intermédiaire d'une porte optique amplificatrice à une des sorties de celui des coupleurs prévu pour recevoir un signal d'entrée porté par cette même longueur d'onde.

L'invention réalise donc un commutateur spatial où chaque signal d'entrée peut être aiguillé vers un ou plusieurs ports de sortie. Grâce à la présence de portes optiques amplificatrices, c'est-à-dire d'amplificateurs optiques généralement optimisés pour permettre une variation rapide de gain en fonction d'une commande électrique ou optique, la puissance par canal peut être maintenue à un niveau convenable. D'autre part, le fait que l'aiguillage soit effectué par une commande en tout ou rien des portes permet une simplification de la commande. De plus, l'utilisation de portes optiques autorise une commutation rapide et implique un taux d'isolation élevé, le taux d'isolation étant défini comme le rapport des puissances du signal de sortie lorsque la porte est respectivement passante et bloquée.

Un autre avantage important est l'absence de bruit interférométrique. Cela est dû au fait que les ondes appliquées aux entrées des multiplexeurs ont des longueurs d'onde toutes différentes et au rôle de filtre joué par les multiplexeurs. En effet, pour un canal donné, chaque multiplexeur élimine le bruit d'amplification des autres canaux. Cet avantage serait absent si l'on utilisait de simples coupleurs à la place des multiplexeurs. Un autre intérêt de la présence des multiplexeurs dans le montage proposé est que le rapport signal à bruit pour chaque canal est indépendant du nombre de canaux aiguillés vers une même sortie. Enfin, les pertes sont réduites au minimum et l'ensemble de ces propriétés autorise un débit élevé.

Selon une variante de réalisation, le dispositif est en outre caractérisé en ce qu'il comporte n convertisseurs de longueur d'onde aptes à fournir respectivement lesdits signaux optiques d'entrée en fonction de signaux optiques externes ayant la forme d'ondes optiques modulées possédant des longueurs d'onde quelconques.

Ainsi, la présence de convertisseurs de longueur d'onde supprime toute contrainte quant à la longueur d'onde des signaux externes à aiguiller. On utilisera avantageusement des convertisseurs de longueur d'onde fixes de façon à assurer la stabilité des porteuses.

L'invention a également pour objet un commutateur temporel permettant d'aiguiller tout signal appliqué à une de ses entrées vers une ou plusieurs de ses sorties, chaque sortie fournissant un signal de sortie retardé par rapport au signal d'entrée, avec un retard variable et fonction de la commande appliquée. Pour cela, le dispositif est en outre caractérisé en ce qu'au moins k-1 sorties de chaque coupleur sont reliées respectivement auxdites entrées des multiplexeurs par l'intermédiaire de lignes à retard optiques dimensionnées pour créer des retards de propagation tous différents.

Avantageusement, chaque ligne à retard est placée de façon à relier une des sorties d'un coupleur à l'une des portes optiques.

L'invention concerne enfin un commutateur spatio-temporel réalisé par la mise en cascade d'un commutateur temporel et d'un commutateur spatial conformes chacun à l'invention.

D'autres aspects et avantages de l'invention apparaîtront dans la suite de la description en référence aux figures.
- la figure 1 représente un dispositif de commutation spatial selon l'invention.
- la figure 2 représente un dispositif de commutation temporel selon l'invention.

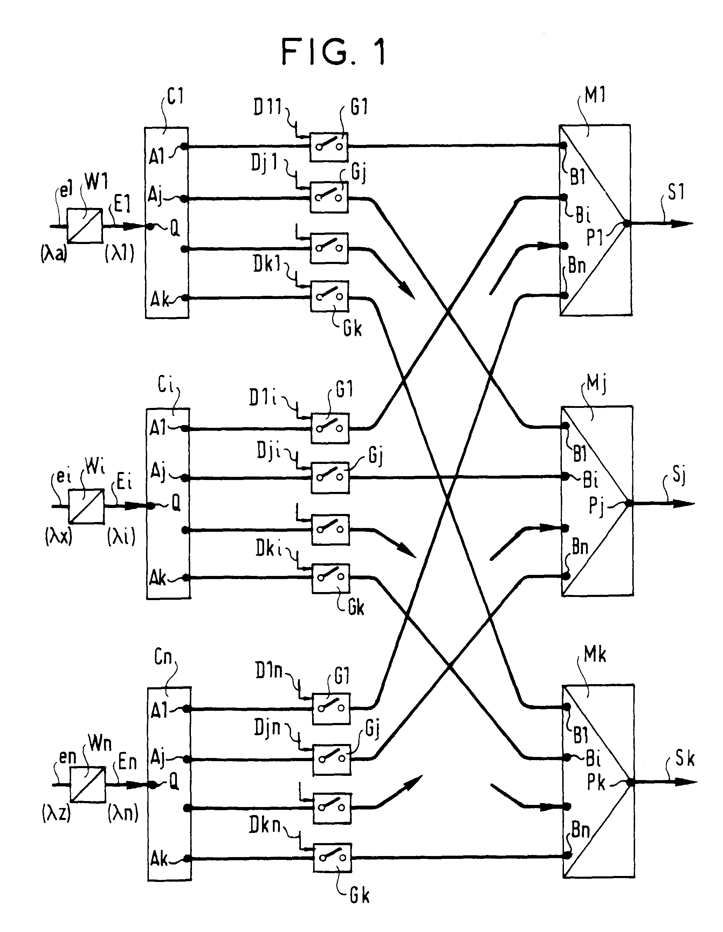

Le commutateur représenté à la figure 1 comprend un nombre n de coupleurs C1, Ci, Cn et un nombre k de multiplexeurs M1, Mj, Mk. Chaque coupleur tel que Ci est muni d'un port d'entrée Q et de k ports de sortie A1, Aj, Ak. Les ports d'entrée Q des coupleurs sont prévus pour recevoir par une liaison optique appropriée des signaux d'entrée E1, Ei, En portés respectivement par les longueurs d'onde λ1, λi, λn. Ces longueurs d'onde λ1, λi, λn correspondent respectivement aux porteuses de canaux de communication et sont donc suffisamment différentes entre elles pour pouvoir être séparées par des démultiplexeurs usuels.

Les multiplexeurs M1, Mj, Mk sont munis chacun d'un port de sortie, respectivement P1, Pj, Pk, prévus pour transmettre les signaux de sortie, respectivement S1, Sj, Sk. Chaque multiplexeur Mj comporte n entrée B1, Bi, Bn calées respectivement sur les longueurs d'onde λ1, λi, λn des porteuses des signaux d'entrée. Cela signifie qu'un multiplexeur ainsi conçu et utilisé en démultiplexeur permettrait de séparer un multiplex de longueurs d'onde introduit par le port Pj en plusieurs composantes disponibles sur les ports B1, Bi, Bn, ces composantes ayant respectivement les longueurs d'onde λ1, λi, λn.

Les entrées B1, Bi, Bn de chaque multiplexeur Mj sont couplées respectivement à l'une des sorties Aj des coupleurs C1, Ci, Cn par l'intermédiaire de portes optiques amplificatrices Gj. Chacune de ces portes Gj peut être constituée d'un amplificateur optique dont le gain est commutable au moyen d'un signal de commande Dji électrique ou optique de façon à le faire fonctionner soit en atténuateur soit en amplificateur. Avantageusement, on utilisera un amplificateur optique à gain stabilisé ayant une structure conforme par exemple à celle décrite dans la demande de brevet européen EP-A-639876, publiée le 22 février 1995.

Les signaux D11, Dj1, Dk1, D1i, Dji, Dki, ..., DKn, constituent la commande d'aiguillage du commutateur. Ainsi, en fonction des signaux de commande appliqués aux différentes portes, il est possible d'aiguiller chaque signal d'entrée Ei vers n'importe quel port de sortie P1, Pj, Pk ou vers n'importe quel ensemble de ports de sortie.

Il est claire que le dispositif ne peut fonctionner correctement qu'à la condition que les porteuses des signaux d'entrée E1, Ei, En possèdent des longueurs d'onde λ1, λi, λn bien déterminées et placées à l'intérieur des bandes de longueurs d'onde autorisées respectivement par les entrées B1, Bi, Bn des multiplexeurs.

Pour échapper à cette contrainte et selon une variante de l'invention, on prévoira avantageusement des convertisseurs de longueurs d'onde W1, Wi, Wn couplées aux entrées Q respectivement des coupleurs C1, Ci, Cn. Les convertisseurs W1, Wi, Wn seront prévus pour fournir en fonction respectivement de signaux externes e1, ei, en, portés par des longueurs d'onde quelconques les signaux d'entrée E1, Ei, En portés respectivement par les longueurs d'onde λ1, λi, λn imposées par les multiplexeurs.

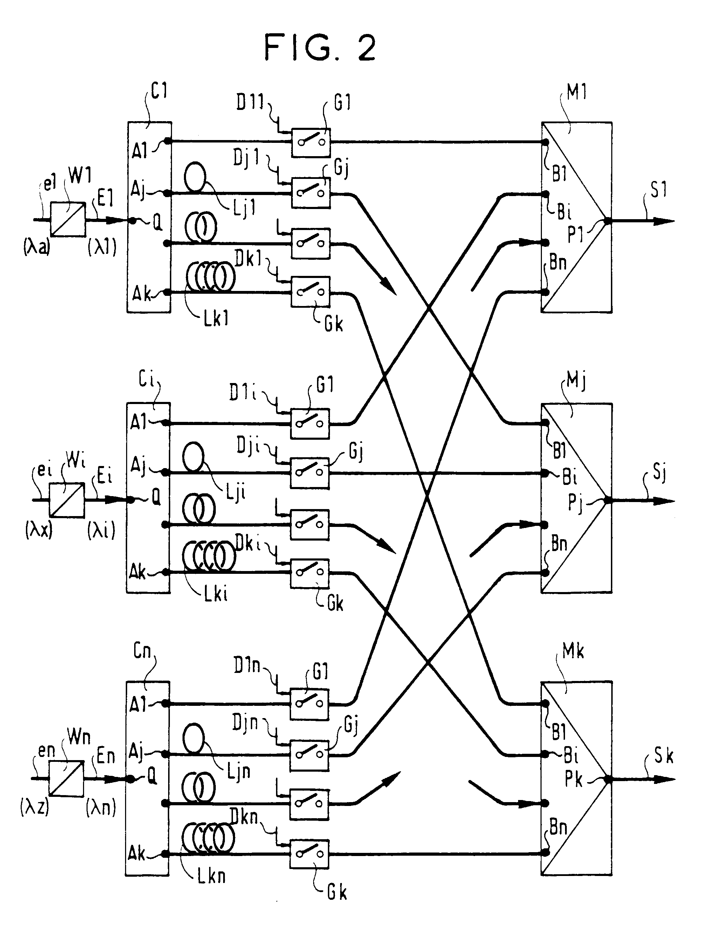

La figure 2 représente un dispositif de commutation temporel de structure identique en grande partie au commutateur spatial qui vient d'être décrit. La différence par rapport au commutateur spatial réside dans le fait qu'au moins k-1 sorties Aj, Ak de chaque coupleur Ci sont reliées respectivement aux entrées B1, Bi, Bn des multiplexeurs par l'intermédiaire de lignes à retard Lj1, Lk1, Lji, Lki, Ljn, Lkn. Les lignes Lji, Lki qui sont reliées à un même coupleur Ci sont dimensionnées pour créer des retards de propagation tous différents.

Ainsi, en fonction des signaux de commande appliqués aux différentes portes optiques, un signal d'entrée quelconque Ei peut être aiguillé vers un ou plusieurs ports de sortie P1, Pj, Pk quelconques avec des retards correspondants. Par exemple, le signal Sj issu du port Pj du multiplexeurs Mj sera composé d'un ou de plusieurs signaux d'entrée Ei affectés de retards correspondant aux lignes à retard Lji.

Les positions relatives des portes et des lignes à retard peuvent être quelconques. Néanmoins, il est préférable de placer ces lignes en amont des portes de façon à autoriser un délai supplémentaire quant à l'activation des portes.

Comme pour le commutateur spatial, on pourra prévoir des convertisseurs de longueurs d'onde W1, Wi, Wn couplées aux entrées Q des coupleurs C1, Ci, Cn pour fournir en fonction de signaux externes el, ei, en, portés par des longueurs d'onde quelconques les signaux d'entrée E1, Ei, En portés respectivement par les longueurs d'onde λ1, λi, λn imposées par les multiplexeurs.

Le choix des retards attribués aux lignes à retard Lji des sous-blocs associés respectivement aux coupleurs Ci dépendra du contexte d'utilisation. Par exemple, dans le cas où les signaux d'entrée E1-En représentent des données binaires organisées en paquets, chaque ligne à retard Lji sera avantageusement dimensionnée pour procurer un retard égal à un nombre entier de fois le temps de propagation d'un paquet.

On réalisera un commutateur spatio-temporel par la mise en cascade d'un commutateur temporel et d'un commutateur spatial conformes aux descriptions qui viennent d'être données, le commutateur temporel étant placé en amont.

Par des montages parallèle et/ou en cascade de tels commutateurs spatio-temporels, on pourra aussi réaliser des matrices de commutation spatio-temporelles. Dans ce contexte, il conviendra de dimensionner les lignes à retard Lji en tenant compte des conditions de trafic des données au sein de la matrice.

## Revendications

1. Dispositif de commutation pour transmettre sélectivement en fonction d'une commande d'aiguillage (D11-Dkn) n signaux optiques d'entrée (E1-En) vers un ou plusieurs ports de sortie (P1-Pk), lesdits signaux d'entrée (E1-En) ayant la forme d'ondes optiques modulées qui possèdent respectivement des longueurs d'onde (λ1-λn) différentes, caractérisé en ce qu'il comporte :
- n coupleurs passifs (C1-Cn) comprenant chacun un nombre de sorties (A1-Ak) égal au nombre k desdits ports de sortie (P1-Pk), et au moins une entrée (Q) apte à recevoir un desdits signaux d'entrée (E1-En),
- k multiplexeurs de longueurs d'onde (M1-Mk) comprenant chacun une sortie constituant un desdits ports de sortie (P1-Pk), et n entrées (B1-Bn) calées respectivement sur lesdites longueurs d'onde (λ1-λn),
et en ce que, pour chaque multiplexeur (Mj), celle de ses entrées (Bi) qui est calée sur une desdites longueurs d'onde (λi) est couplée par l'intermédiaire d'une porte optique amplificatrice (Gj) à une des sorties (Aj) de celui des coupleurs (Ci) prévu pour recevoir un signal d'entrée (Ei) porté par cette même longueur d'onde (λi).

2. Dispositif de commutation selon la revendication 1, caractérisé en ce qu'il comporte n convertisseurs de longueur d'onde (W1, Wi, Wn) aptes à fournir respectivement lesdits signaux optiques d'entrée (E1-En) en fonction de signaux optiques externes (el-en) ayant la forme d'ondes optiques modulées possédant des longueurs d'onde quelconques (λa-λz).

3. Dispositif de commutation selon l'une des revendications 1 ou 2, caractérisé en ce que lesdites portes optiques amplificatrice (G1, Gj, Gk) sont des amplificateurs à gain stabilisé.

4. Dispositif de commutation selon l'une des revendications 1 à 3 , caractérisé en ce qu'au moins k-1 sorties (Aj-Ak) de chaque coupleur (C1-Cn) sont reliées respectivement auxdites entrées (B1-Bn) des multiplexeurs (M1-Mk) par l'intermédiaire de lignes à retard optiques (Lj1-Lkn) dimensionnées pour créer des retards de propagation tous différents.

5. Dispositif de commutation selon la revendication 4, caractérisé en ce que chaque ligne à retard (Lji) est placée de façon à relier une des sorties (Aj) d'un coupleur (Ci) à l'une portes optiques (Gj).

6. Dispositif de commutation selon l'une des revendications 4 à 5, caractérisé en ce que lesdits signaux d'entrée (E1-En) étant représentatifs de données binaires organisées en paquets, chaque ligne à retard (Lji) est dimensionnée pour procurer un retard égal à un nombre entier de fois le temps de propagation d'un paquet.

7. Commutateur spatio-temporel, caractérisé en ce qu'il est réalisé par la mise en cascade d'un commutateur temporel conforme à l'une des revendications 4 à 6 et d'un commutateur spatial conforme à l'une des revendications 1 à 3.
